# EUROPÄISCHE PATENTSCHRIFT

(11) **EP 1 255 279 B1**
(45) Veröffentlichungstag und Bekanntmachung des Hinweises auf die Patenterteilung: **21.03.2007**
(21) Anmeldenummer: 02008323.4
(22) Anmeldetag: 11.04.2002
(51) Int. Cl.: H01K 1/18, H01K 1/50, H01K 1/28, H01K 1/16, H01K 3/06

(54) **Halogenglühlampe**
Halogen incandescent lamp
Lampe incandescente à halogène

(30) Priorität: 03.05.2001 DE 10121579
(43) Veröffentlichungstag der Anmeldung: 06.11.2002
(73) Patentinhaber: Patent-Treuhand-Gesellschaft für elektrische Glühlampen mbH, 81543 München (DE)
(72) Erfinder: Bunk, Axel, 81379 München (DE); Ciupke, Walter, 89542 Herbrechtingen (DE); Kreis, Guenter, 89547 Gerstetten (DE); Kass, Thomas, Dr., 85051 Ingolstadt (DE); Koziol, Joachim, 89520 Heidenheim (DE); Minder, Rolf, 89564 Nattheim (DE)

(56) Entgegenhaltungen:
- EP-A- 0 586 309
- WO-A-99/60604
- US-A- 2 116 575
- US-A- 2 315 504
- US-A- 5 886 466

## Beschreibung

Die Erfindung betrifft eine Halogenglühlampe gemäß dem Oberbegriff des Patentanspruchs 1. Insbesondere handelt es sich um eine Miniatur-Halogenglühlampe mit einer elektrischen Leistungsaufnahme von höchstens 10 W, die zum Einsatz in dem Reflektor einer batteriegespeisten Taschenleuchte vorgesehen ist.

### I. Stand der Technik

Eine derartige Halogenglühlampe ist in der Patentschrift US 5,886,466 offenbart. Die in diesem Dokument beschriebene Halogenglühlampe besitzt einen lichtdurchlässigen im wesentlichen zylindrischen Lampenkolben mit einem Durchmesser von 6,3 mm bis 8,0 mm. Der Lampenkolben ist mit einem Inertgas, insbesondere Xenon, das mit einem Halogenzusatz versehen ist, gefüllt und umschließt eine Glühwendel, die mit zwei aus dem Lampenkolben herausragenden Stromzuführungen elektrisch leitend verbunden ist.

### II. Darstellung der Erfindung

Es ist die Aufgabe der Erfindung, bei einer gattungsgemäßen Halogenglühlampe den nutzbaren Anteil des von der Glühwendel erzeugten Lichts zu erhöhen und beim Einsatz dieser Lampe in einem Reflektor die Abbildungseigenschaften des Systems zu verbessern.

Diese Aufgabe wird durch die Merkmale des Patentanspruchs 1 gelöst. Besonders bevorzugte Ausführungsformen der Erfindung sind in den abhängigen Patentansprüchen beschrieben.

Bei der erfindungsgemäßen Halogenglühlampe sind die in den Innenraum hineinragenden Abschnitte der Stromzuführungen als abgeplattete Drähte ausgebildet. Dadurch wird der von den Stromzuführungen verursachte Abschattungseffekt über einen weiten Raumwinkel erheblich reduziert und damit der nutzbare Anteil des von der Glühwendel erzeugten Lichts deutlich erhöht. Außerdem weist die erfindungsgemäße Halogenglühlampe im Vergleich zum Stand der Technik einen Lampenkolben mit einem verringerten Außendurchmesser auf. Dadurch kann beim Einsatz der erfindungsgemäßen Halogenglühlampe in einem Reflektor die nutzbare Reflektorfläche im Scheitelbereich des Reflektors vergrößert und mehr Licht reflektiert werden. Beide vorgenannten Maßnahmen tragen zu einer erhöhten Lichtstärke in axialer Richtung des Reflektors bei.

Vorteilhafterweise sind die Enden der abgeflachten Stromzuführungsabschnitte hakenförmig ausgebildet und mit der Glühwendel durch eine Schweißverbindung verbunden, um eine sichere Aufhängung und Kontaktierung der Wendel zu gewährleisten. Vorzugsweise sind die hakenförmigen Enden sogar um einen Winkel von 180 Grad zurückgebogen, um eine klemmende Fixierung der Glühwendelenden zwischen den beiden Schenkeln der hakenförmigen Enden zu ermöglichen. Die zusätzliche Schweißverbindung verhindert, dass die hakenförmigen Enden sich während des Lampenbetriebs wieder öffnen. Die Schweißverbindung ist vorteilhafterweise als Punktschweißverbindung, beispielsweise mittels eines LASERs, ausgeführt, wobei die Schweißpunkte an den Außenkanten der hakenförmigen Enden so angeordnet sind, dass sie deren Kontur nicht überragen, um keine weitere Abschattung des Lichts durch die Schweißung zu verursachen.

Eine Miniaturglühlampe, wobei die sich im Lampenkolben befindenden Enden der Stromzuführungsdrähte abgeflacht und hakenförmig ausgebildet sind um die Verschweißung zu vereinfachen, ist bekannt aus der Patentschrift US 2,315,504.

Als Füllgas wird vorteilhafterweise Xenon, das mit einem Halogenzusatz versehen ist, verwendet. Xenon besitzt von allen verwendbaren Edelgasen die größte Atommasse und eignet sich daher am besten zur Verringerung der Wolframabdampfrate von dem Glühwendeldraht. Zu diesem Zweck weist der Füllgasdruck bei Raumtemperatur vorteilhafterweise einen Wert zwischen 5 bar und 30 bar auf. Der Halogenzusatz verhindert mittels des Halogenkreisprozesses eine Schwärzung des Lampenkolbens durch das von der Glühwendel abdampfende Wolfram. Die Verringerung der Wolframabdampfrate durch den hohen Xenongasdruck ermöglicht entweder eine Erhöhung der Glühwendeltemperatur und damit eine Anhebung der Lichtausbeute oder alternativ eine Verlängerung der Lebensdauer der Lampe. Der Lampenkolben besteht vorteilhafterweise aus einem Hartglas oder aus Quarzglas, um eine ausreichende Berstdruckbeständigkeit von bis zu 80 bar und eine ausreichende Hitzebeständigkeit von bis zu 750° Celsius und eine ausreichende Beständigkeit gegen chemische Angriffe durch die Halogenfüllung zu gewährleisten.

### III. Beschreibung der bevorzugten Ausführungsbeispiele

Nachstehend wird die Erfindung anhand von zwei bevorzugten Ausführungsbeispielen näher erläutert. Es zeigen:

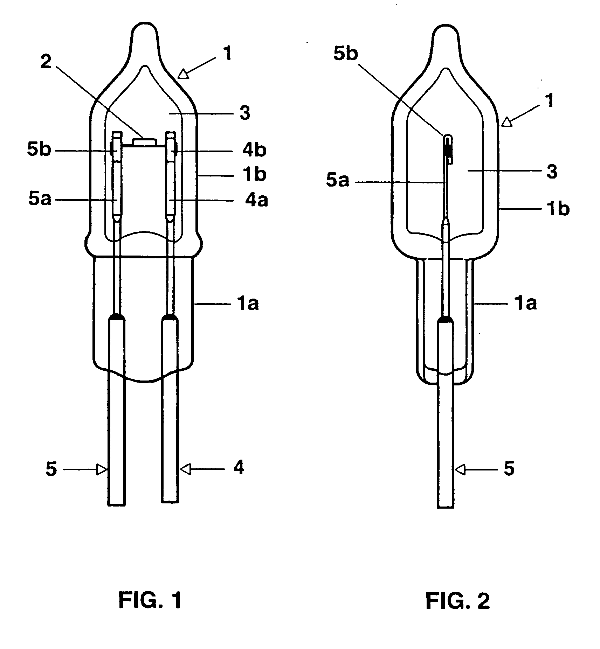

- Figur 1: Eine erste Seitenansicht der erfindungsgemäßen Halogenglühlampe
- Figur 2: Eine zweite, gegenüber der Figur 1 um 90 Grad gedrehte Seitenansicht der erfindungsgemäßen Halogenglühlampe

Die Halogenglühlampe besitzt gemäß beider Ausführungsbeispiele der Erfindung einen Lampenkolben 1 aus Hartglas, der einen zylindrischen Lampenkolbenbereich 1b und einen gasdicht verschlossenen Quetschfuß 1a aufweist. Der zylindrische Lampenkolbenbereich weist einen Außendurchmesser von 5,0 mm ± 0,2 mm auf. Im Innenraum des Lampenkolbens 1, und insbesondere im Innenraum 3 des zylindrischen Lampenkolbenbereichs 1b, ist eine aus Wolfram bestehende Glühwendel 2 angeordnet. Die Glühwendel 2 wird mittels zweier Stromzuführungen 4, 5 mit elektrischer Energie versorgt. Die Stromzuführungen 4, 5 sind durch den Quetschfuß 1a hindurchgeführt. Die aus dem Lampenkolben 1 herausragenden Abschnitte der Stromzuführungen 4, 5 sind als Kontaktstifte ausgebildet. Die im Innenraum 3 des Lampenkolbens 1 angeordneten Abschnitte 4a, 5a der Stromzuführungen 4, 5 sind als abgeplattete Drähte ausgebildet. Ihre Enden 4b, 5b sind um einen Winkel von 180 Grad zurückgebogen und bilden jeweils einen Haken 4b, 5b, in dem jeweils ein Ende der Glühwendel 2 klemmend fixiert ist. Die Außenkanten - aber nicht die planen Oberflächen - der hakenförmigen Enden 4b, 5b der Stromzuführungen 4, 5 sind mit Schweißpunkten versehen, um ein Öffnen der hakenförmigen Enden 4b bzw. 5b zu verhindern und eine sichere elektrische Kontaktierung zu gewährleisten.

Die Halogenglühlampe gemäß des ersten Ausführungsbeispiels besitzt eine elektrische Leistungsaufnahme von 3,3 W bei einer Versorgungsspannung von 2,7 V, einen Füllgasdruck von 15 bar (bei Raumtemperatur) in Form von Xenon mit 400 ppm Halogenzusatz, eine Lichtausbeute von 13,6 lm/W, eine mittlere Farbtemperatur von 3140 Kelvin und eine Nennlebensdauer von 60 Stunden.

Die Halogenglühlampe gemäß des zweiten Ausführungsbeispiels besitzt eine elektrische Leistungsaufnahme von 1,0 W bei einer Versorgungsspannung von 2,2 V, einen Füllgasdruck von 15 bar (bei Raumtemperatur) in Form von Xenon mit 200 ppm Halogenzusatz, eine Lichtausbeute von 10,0 lm/W, eine mittlere Farbtemperatur von 3100 Kelvin und eine Nennlebensdauer von 20 Stunden.

## Patentansprüche

1. Halogenglühlampe mit einem Lampenkolben (1), der einen lichtdurchlässigen, zylindrischen Lampenkolbenbereich (1b) aufweist, mit einem im Innenraum (3) des Lampenkolbens (1) eingeschlossenen Füllgas, das ein Edelgas oder ein Edelgasgemisch und einen Halogenzusatz enthält, mit einer im Innenraum (3) des Lampenkolbens (1) angeordneten Glühwendel (2) und mit zwei Stromzuführungen (4, 5) für die Glühwendel (2),
**dadurch gekennzeichnet,**
- **dass** die im Innenraum (3) des Lampenkolbens (1) verlaufenden Abschnitte (4a, 5a) der Stromzuführungen (4, 5) als abgeplattete Drähte ausgebildet sind,
- der Außendurchmesser des zylindrischen Lampenkolbenbereichs (1b) einen Wert von 3,0 bis 6,2 mm besitzt.

2. Halogenglühlampe nach Anspruch 1, **dadurch gekennzeichnet, dass** die Enden (4b, 5b) der abgeplatteten Drähte (4a, 5b) hakenförmig ausgebildet und jeweils durch eine Schweißverbindung mit der Glühwendel (2) verbunden sind.

3. Halogenglühlampe nach Anspruch 1, **dadurch gekennzeichnet, dass** das Edelgas oder Edelgasgemisch Xenon ist.

4. Halogenglühlampe nach Anspruch 1 oder 3, **dadurch gekennzeichnet, dass** der Füllgasdruck bei Raumtemperatur einen Wert zwischen 5 bar und 30 bar aufweist.

## Claims

1. Halogen incandescent lamp having a lamp bulb (1) that has a transparent, cylindrical lamp bulb region (1b), having a fill gas that is enclosed in the interior (3) of the lamp bulb (1) and contains an inert gas or an inert gas mixture and a halogen additive, having an incandescent filament (2) arranged in the interior (3) of the lamp bulb (1) and having two supply leads (4, 5) for the incandescent filament (2), **characterized**
- **in that** the sections (4a, 5a), running in the interior (3) of the lamp bulb (1) of the supply leads (4, 5) are constructed as flattened wires, and
- the outside diameter of the cylindrical lamp bulb region (1b) has a value of 3.0 to 6.2 mm.

2. Halogen incandescent lamp according to Claim 1, **characterized in that** the ends (4b, 5b) of the flattened wires (4a, 5b) are of hook-shaped design and are connected in each case to the incandescent filament (2) by means of a welded connection.

3. Halogen incandescent lamp according to Claim 1, **characterized in that** the inert gas or inert gas mixture is xenon.

4. Halogen incandescent lamp according to Claim 1 or 3, **characterized in that** the fill gas pressure has a value of between 5 bars and 30 bars at room temperature.

## Revendications

1. Lampe à incandescence aux halogènes, comprenant une ampoule (1) de lampe qui a une partie (1b) d'ampoule de lampe transparente à la lumière et cylindrique, comprenant un gaz de charge, inclus à l'intérieur (3) de l'ampoule (1) de lampe et comportant un gaz rare ou un mélange de gaz rares et un additif aux halogènes, comprenant un filament (2) incandescent disposé à l'intérieur (3) de 1'ampoule (1) de lampe et deux entrées (4, 5) de courant pour le filament (2) incandescent,
**caractérisée**
- **en ce que** les tronçons (4a, 5a) des entrées (4, 5) de courant s'étendant à l'intérieur (3) de l'ampoule (1) de lampe sont constitués sous la forme de fils aplatis,
- le diamètre extérieur de la partie (1b) de l'ampoule de lampe a une valeur allant de 3,0 à 6,2 mm.

2. Lampe à incandescence aux halogènes suivant la revendication 1, **caractérisée en ce que** les extrémités (4b, 5b) des fils (4a, 5a) aplatis sont en forme de crochet et sont reliées, respectivement, par un joint soudé au filament (2) incandescent.

3. Lampe à incandescence aux halogènes suivant la revendication 1, **caractérisée en ce que** le gaz rare ou le mélange de gaz rares est du xénon.

4. Lampe à incandescence aux halogènes suivant la revendication 1 ou 3, **caractérisée en ce que** la pression du gaz de charge à la température ambiante a une valeur comprise entre 5 bars et 30 bars.
